# EUROPÄISCHE PATENTSCHRIFT

(11) **EP 1 569 386 B1**
(45) Veröffentlichungstag und Bekanntmachung des Hinweises auf die Patenterteilung: **19.09.2012**
(21) Anmeldenummer: 05004002.1
(22) Anmeldetag: 24.02.2005
(51) Int. Cl.: H04L 12/28

(54) **Verfahren und Vorrichtung zum Verbreiten von Nachrichten**
Method and Apparatus for message distribution
Procédé et appareil pour la distribution des messages

(30) Priorität: 26.02.2004 DE 102004009347
(43) Veröffentlichungstag der Anmeldung: 31.08.2005
(73) Patentinhaber: Giesecke & Devrient GmbH, 81677 München (DE)
(72) Erfinder: Finkenzeller, Klaus, 80939 München (DE); Ojster, Albert, 81373 München (DE)

(56) Entgegenhaltungen:
- EP-A1- 1 300 990
- EP-A2- 0 948 222
- EP-A2- 1 133 116

## Beschreibung

Die Erfindung betrifft ein Verfahren und eine Vorrichtung zum örtlichen und/ oder regionalen Verbreiten von Nachrichten.

Verfahren und Vorrichtungen dieser Art sind unter anderem in der Werbewirtschaft und als Informationsmedium einsetzbar.

Elektronisch können Nachrichten und Mitteilungen leicht über schwarze Bretter oder Foren im Internet vielen Personen zugänglich gemacht werden. Diese Art der Nachrichtenverbreitung hat jedoch für bestimmte Anwendungen zwei wesentliche Nachteile: Einerseits ist es aufgrund des nahezu weltweiten Zugangs zu Nachrichten über das Internet und der daraus.resultierenden, eher unspezifischen Informationsverbreitung für einen Nachrichtensender äußerst schwer, eine Nachricht einem bestimmten Personenkreis gezielt mitzuteilen oder örtlich und/ oder regional konzentriert zu verbreiten. Andererseits ist es für einen potentiellen Nachrichtenempfänger aufgrund der enormen Informationsmenge des Internets mitunter schwierig eine gewünschte Nachricht zu finden und abzurufen.

Diese Effekte führen insbesondere bei der Verbreitung von Nachrichten mit örtlichem und/oder regionalen Bezug und einer genau einzugrenzenden Zielgruppe dazu, daß das Internet für derartige Nachrichten ein relativ ineffizientes Nachrichtenmedium ist. Diese Art der Kommunikation ist demnach für viele Zwecke zu unspezifisch.

Eine gezieltere Nachrichtenverbreitung ist mittels Kurznachrichten (Short Message Service, SMS) über die diversen Mobilfunknetze möglich. Jedoch weist diese Art der Informationsübertragung den Nachteil auf, daß eine Nachricht nur an (einzelne) Personen gesendet werden kann, deren Mobilfunknummer bekannt ist, so daß diese Art der Kommunikation oftmals zu spezifisch ist.

Da bei der SMS-Kommunikation über Mobilfunk, wie auch bei der Nutzung eines Internet-Forums ein Nachrichtensender keinerlei Information über den momentanen Aufenthaltsort eines Nachrichtenempfängers besitzt, können damit Nachrichten mit regionalem/ örtlichem Bezug nicht gezielt an gerade diejenigen Personen gesandt werden, die sich körperlich in einer bestimmten Region oder an einem bestimmten Ort befinden.

Die Merkmale der jeweiligen Oberbegriffe der unabhängigen Ansprüche werden in der EP 1 133 116 offenbart.

Demzufolge liegt der vorliegenden Erfindung die Aufgabe zugrunde, die Verbreitung von elektronischen Nachrichten an beliebige in einem örtlich und/ oder regional eingegrenzten Bereich befindliche Personen zu ermöglichen und zu verbesseren.

Diese Aufgabe wird erfindungsgemäß durch ein Verfahren und ein Telekommunikations-Endgerät mit den Merkmalen der unabhängigen Ansprüche gelöst. In davon abhängigen Ansprüchen sind vorteilhafte Ausgestaltungen und Weiterbildungen der Erfindung angegeben.

Erfindungsgemäß wird die Verbreitung einer Nachricht durch den Aufbau eines temporären, drahtlosen Ad-hoc Netzwerks im Nahbereich von zumindest zwei Telekommunikations-Endgeräten realisiert, so daß die Endgeräte über ihre Nahbereichskommunikationseinrichtungen Nachrichten an andere in deren Nahbereich befindliche Telekommunikations-Endgeräte versenden und von diesen Nachrichten empfangen und weiterversenden können.

Dazu wird eine zu verbreitende Nachricht zunächst auf einem ersten Sendegerät erstellt und über die Nahbereichskommunikationseinrichtung des ersten Sendegerätes in dessen Nahbereich drahtlos erstmalig versandt. Ein anderes, zum Empfang von Nachrichten eingerichtetes Telekommunikations-Endgerät, das sich im Nahbereich des ersten Sendegerätes befindet, empfängt dann die vom Sendegerät versandte Nachricht drahtlos mittels einer Nahbereichskommunikationseinrichtung, die eingerichtet ist, um mit der korrespondierenden Nahbereichskommunikationseinrichtung des Sendegerätes zu kommunizieren. Falls das Empfangsgerät zudem eingerichtet ist, als weiteres Sendegerät zu operieren, wird die empfangene Nachricht automatisch an andere potentielle Empfangsgeräte weiterversendet, die sich im Nahbereich dieses weiteren Sendegerätes befinden.

Als erfindungsgemäße Telekommunikations-Endgeräte können besonders vorteilhaft Mobiltelefone, aber auch mit entsprechenden Nahbereichskommunikationseinrichtungen ausgerüstete, ortsgebundene Festnetz-Telefone, Personal-Computer, Notebooks und Laptops sowie Pager und Personal Digital Assistents (PDA) verwendet werden. Ebenso ist es möglich, stationäre Informations- und Serviceterminals, beispielsweise in Warenhäusern, öffentlichen Gebäuden und Plätzen wie Flughäfen, Bahnhöfen etc. mit einem entsprechenden Telekommunikations-Endgerät auszustatten.

Auf diese Weise wird eine Nachricht sukzessive von Telekommunikations-Endgeräten innerhalb ihrer Nahbereiche weiterversandt, und die Nachricht verbreitet sich in mehreren Schritten über alle Telekommunikations-Endgeräte, die über eine Kette von zu irgendeinem Zeitpunkt überlappenden Nahbereichen mit dem ersten Sendegerät verbunden sind. Dies hat den Vorteil, daß eine Nachricht nur an solche Empfänger versandt bzw. weiterversandt wird, die sich in örtlicher Nähe zu dem entsprechenden Sendegerät befinden. Nachrichten mit örtlichem Bezug (z.B. die Werbenachricht eines Einzelhändlers oder die Hinweisnachricht einer Behörde) können dadurch gezielt an Personen versandt werden, die sich an dem betreffenden Ort oder in dessen Umgebung befinden und somit unmittelbar auf die Nachricht reagieren können (z.B. indem sie den Einzelhändler aufsuchen oder einen behördlichen Hinweis beachten). Die Kenntnis der Mobilfunknummer oder einer anderen Adressierung der Nachrichtenempfänger ist hierfür nicht erforderlich. Ebensowenig ist für den Empfänger die Kenntnis des Senders erforderlich.

Ein Sendegerät muß nicht notwendigerweise als Empfangsgerät eingerichtet sein. So ist es beispielsweise möglich ein reines Sendeterminal zur Information von Besuchern zu betreiben, wobei die Telekommunikations-Endgeräte der Besucher teilweise die empfangene Nachricht weiterversenden (z.B. über Mobiltelefon) und teilweise diese Nachricht nur empfangen ohne sie weiterzusenden (z.B. Laptop, dessen Sendefunktionalität deaktiviert ist). Ebenso ist es vorstellbar, die Erfindung zur effizienten Bürokommunikation einzusetzen, wobei ein zentrales, erfindungsgemäß ausgestattetes Festnetztelefon eine Nachricht initial an Telefone in dessen Nahfeld versendet und diese die Nachricht sukzessive an weitere Telefone weiterversenden, die die Nachricht gegebenenfalls sofort auf einem Display anzeigen.

Das drahtlose Versenden der Nachricht im Nahbereich wird durch einander entsprechende und zueinander kompatible Nahbereichskommunikationseinrichtungen des Sendegeräts und des Empfangsgeräts sichergestellt. Dazu eignet sich insbesondere die sog. "Near Field Communication" (NFC), die Daten mittels magnetischer Felder überträgt. Als Sende-/ bzw. Empfangsgeräte sind aktive oder passive RFID-Transponder denkbar, die mit einem weiteren NFC-Gerät kommunizieren können. Alternativ sind auch andere drahtlose Datenübertragungstechnologien einsetzbar, z.B. Infrarot-Schnittstellen (IRED), Bluetooth- oder WLAN-Technologien (Wireless Local Area Network).

Das erfindungsgemäße Verbreiten von Nachrichten geschieht unspezifisch, ohne daß dem Sendegerät ein bestimmter Empfänger bekannt ist oder ein Empfang durch einen bestimmten Empfänger angestrebt wird. So kann bei einer vorteilhaften Ausgestaltung der Erfindung das erste oder ein weiteres (mobiles) Sendegerät seinen Nahbereich mittels der Nahbereichskommunikationseinrichtung überwachen - beispielsweise durch das regelmäßige Senden von Anfragesignalen ("inquiry messages") -, um andere (mobile) Telekommunikations-Endgeräte zu detektieren, die als Empfangsgeräte eingerichtet sind und die sich im Nahfeld des Sendegerätes befinden.

Das Sendegerät etabliert dann durch Aufbau einer Verbindung (Synchronisation) zu jedem der detektierten Empfängergeräte ein drahtloses Nahbereichs-Netzwerk (ein sog. "Pico-Net"), beispielsweise als Master/Slave-Konfiguration. Anschließend wird die Nachricht vom Sendegerät (Master) an alle Empfangsgeräte (Slaves) in einer determinierten Reihenfolge versendet. Unter Umständen können sich mehrere dieser Nahbereichs-Netze zu einem größeren Netzwerk verbinden, wenn es den Empfangsgeräten möglich ist, gleichzeitig als Sendegeräte eigene Nahbereichs-Netze aufzubauen, indem sie ihrerseits die Telekommunikations-Endgeräte in ihren Nahbereichen synchronisieren und als Slaves einbinden. Auf diese Weise entsteht ein höchst dynamisches Ad-hoc-Netzwerk, dessen Knoten jeweils als Slaves Nachrichten empfangen und diese als Master weiterversenden können (sog. "Scatternet"). In ähnlicher Form, allerdings weniger dynamisch, können sich auch Ad-hoc-Netzwerke aus stationären Telekommunikations-Endgeräten, beispielsweise den Festnetz-Telefonen eines Büros, aufbauen.

Die zu versendenden und zu empfangenden Nachrichten können z.B. die im Mobilfunk bekannten SMS-Kurznachrichten sein oder auch MMS (Multi-Media SMS), die Bilder oder animierte Bildfolgen enthalten. Prinzipiell ist jedes Datenformat verwendbar, so z.B. auch E-Mail-Formate (evtl. mit Attachment), Bild- und Bildsequenzformate (z.B. JPG, TIF, MPG, etc.), aber auch Audio-Formate wie MP3 und WAV.

Zur Bereitstellung einer Nachricht auf dem ersten Sendegerät ist es vorteilhaft, wenn das Telekommunikations-Endgerät eine entsprechende Bereitstellungseinrichtung umfaßt. Diese kann prinzipiell sehr unterschiedlich realisiert werden, z.B. als Tastatur oder Text-Editor für Textnachrichten oder als Draw-Pad oder Graphik-Editor für graphische Nachrichten. Darüber hinaus kann ein Zugang zum Internet oder zu proprietären Datenbanken für Logos und Pictogramme über Mobilfunk (GSM, UMTS), W-LAN oder eine andere dazu geeignete Technologie zum Download von vorgefertigten Text-, Graphik- oder Audionachrichten zur Bereitstellung von Nachrichten in ein Telekommunikations-Endgerät eingerichtet sein.

In diesem Zusammenhang ist es vorteilhaft, daß eine Nachricht dem Empfänger unmittelbar nach ihrem Empfang auf einer Anzeigeeinrichtung des Empfangsgerätes, etwa optisch über ein Display oder einen Bildschirm oder akustisch über einen Lautsprecher, zur Kenntnis gebracht wird.

Für jede Nachricht wird bei ihrer Bereitstellung eine nachrichtenindividuelle Kennung von einer Kennungseinrichtung des ersten Sendegerätes generiert, mit der die Nachricht eindeutig gekennzeichnet wird und die die Nachricht auch bei ihrer weiteren Verbreitung durch Weiterversenden von anderen Telekommunikations-Endgeräte unverändert beibehält.

Der Vorteil der Verwendung einer eindeutigen Kennung ist, daß Nachrichten bereits über ihre Kennungen automatisch vergleichbar sind, ohne daß die Nachrichten selbst gelesen werden müssen. Der Kennungsvergleich kann zum Verhindern des mehrfachen Empfangens gleicher Nachrichten eingesetzt werden. Dazu umfaßt das Empfangsgerät einen Speicher, beispielsweise einen speziellen Kennungsspeicher, in dem die Kennungen jeder eintreffenden Nachricht abgelegt werden. Dor verbleiben sie, selbst wenn die zugehörigen Nachrichten gelöscht werden sollten. Falls das Empfangsgerät eine neue Nachricht empfängt, wird die Kennung der neuen Nachricht zunächst von einer Überprüfungseinrichtung des Empfangsgerätes mit allen im Kennungsspeicher gespeicherten Kennungen verglichen. Falls durch die Überprüfung festgestellt wird, daß die Kennung der neu empfangenen Nachricht bereits im Kennungsspeicher vorliegt, wird die neue Nachricht verworfen, da sie offenbar bereits zu einem früheren Zeitpunkt empfangen wurde. Falls die Überprüfung negativ ausfällt, ist die Nachricht dem Benutzer des Empfangsgerätes noch unbekannt und wird akzeptiert. Gleichzeitig wird die Kennung im Kennungsspeicher hinterlegt, um ein erneutes Empfangen auch dieser akzeptierten Nachricht zu verhindern

Die Nachricht und ihre Kennung werden nicht gemeinsam versendet, sondern es wird zunächst nur die Kennung versendet, während die zugehörige Nachricht erst auf eine explizite Aufforderung des Empfangsgerätes nachgeschickt wird. Dieser Prozeß wird von einer Steuereinrichtung des Sendegerätes koordiniert.

Das Empfangsgerät empfängt in diesem Fall zunächst die Kennung und überprüft anhand der im Kennungsspeicher bereits gespeicherten Kennungen ob eine Nachricht mit ebendieser Kennung bereits zu einem früheren Zeitpunkt empfangen wurde. Falls dies nicht der Fall ist, antwortet das Empfangsgerät auf den Empfang der Kennung mit einem Akzeptanzsignal an das betreffende Sendegerät. Bei Empfang des Akzeptanzsignals versendet das Sendegerät schließlich die Nachricht, da nun sichergestellt ist, daß das Empfangsgerät diese Nachricht erstmalig erhalten wird. Bei einer positiven Überprüfung der empfangenen Kennung (d.h. die Kennung liegt bereits im Kennungsspeicher vor) kann das Empfangsgerät den Empfang der Nachricht dagegen entweder aktiv durch ein Verweigerungssignal ablehnen oder alternativ und praktikabler jede weitere Reaktion gänzlich unterlassen, da das Sendegerät nur bei Empfangen eines Akzeptanzsignals die Nachricht versendet.

Prinzipiell ist es vorteilhaft, wenn die Überprüfung der Kennung für den Benutzer transparent ist, so daß er erst dann unterrichtet wird, wenn eine tatsächlich neue Nachricht eintrifft.

Die Kennung kann automatisch durch eine Kennungseinrichtung des ersten Sendegeräts generiert werden, die vorteilhaft als Programm vorliegt, das in einem Programmspeicher des Sendegerätes residiert und von einem Prozessor bei Bedarf ausgeführt wird. Die derart generierte individuelle Kennung kann beispielsweise eine Kombination aus der eindeutigen Gerätenummer des ersten Sendegerätes und einer laufenden Nummer kombiniert werden. Ebenso ist es möglich einen Hash-Wert der zu versendenden Nachricht als ihre individuelle Kennung zu erzeugen. Hash-Werte kodieren den Nachrichteninhalt eindeutig, sind jedoch nicht entschlüsselbar und brauchen dies auch nicht zu sein, da sie nur zu Vergleichszwecken verwendet werden. Der weiterführende Vorteil der Verwendung eines Hash-Wertes als Kennung liegt darin, daß ein Empfangsgerät die Kennung durch erneute Hash-Wert-Bildung der Nachricht und Vergleich überprüfen kann und somit etwaige Manipulationen der Nachricht oder der Kennung erkannt werden können.

Bei Telekommunikations-Endgeräten, die sowohl als Sendegerät als auch als Empfangsgerät einzurichten sind, ist es vorteilhaft, zur Realisation der beiden zur Kennungsbehandlung notwendigen Funktionalitäten der Kennungsgenerierung und der Kennungsüberprüfung eine kombinierte Kennungseinrichtung vorzusehen, die die oben beschriebene Kennungseinrichtung (des ersten Sendegerätes) und die Überprüfungseinrichtung (eines jeden Empfangsgerätes) integriert.

In einer bevorzugten Ausführungsform der Erfindung wird das Empfangen von Nachrichten für den Empfänger gesichert, indem die Nachrichten vor dem erstmaligen Versenden oder dem Weiterversenden durch das erste oder jedes weiteren Sendegeräts jeweils mit einem persönlichen Signaturschlüssel signiert wird. Dadurch kann das Empfangsgerät die Identität des Senders und gegebenenfalls aller vormaligen Sender der Nachricht überprüfen, wenn die Signaturen der vormaligen Sender beim Weiterversenden mitversandt werden. Dieses Sicherheitsmerkmal erlaubt dem Empfänger das eindeutige Zurückführen einer empfangenen Nachricht auf ihren Urheber und ermöglicht dadurch eine verantwortliche und vertrauenswürdige Kommunikation.

Zur Signierung einer (weiter) zu versendenden Nachricht umfaßt das erste oder ein weiteres Sendegerät eine Signatureinrichtung und einen personenindividuellen, privaten Signaturschlüssel, mit dem die Signierung durch Verschlüsseln der Nachricht durchgeführt wird. Zu dem privaten Signaturschlüssel hat ausschließlich die versendende Person Zugang, es handelt sich also um einen geheimen Schlüssel. Es ist insofern von Vorteil, den privaten Schlüssel in einem sicheren Speicher auf dem Sendegerät abzulegen, der zusätzlich durch ein Paßwort geschützt ist und der somit für nichtberechtigte Personen oder fremde Prozesse nicht zugänglich ist.

Beim Signieren der Nachricht wird die Nachricht (unabhängig von ihrem Format oder Datentyp) mit einem geeigneten asymmetrischen Signatur-Algorithmus (z.B. RSA/PGP) unter Verwendung des privaten Schlüssels verschlüsselt. Die so generierte Signatur wird an die Nachricht angefügt und zusammen mit ihr versandt. Zur Verifikation der Signatur durch das Empfangsgerät benötigt ein Empfänger der Nachricht einen mit dem privaten Schlüssel des Sendegerätes korrespondierenden, aber von ihm unreproduzierbar verschiedenen öffentlichen Signaturschlüssel. Mit diesem wird die Signatur der Nachricht entschlüsselt, so daß bei genauer Übereinstimmung der entschlüsselten Signatur und der originalen Klartext-Nachricht die Identität des Senders verifiziert werden kann. Die solcherart korrekte Authentisierung stellt zudem sicher, daß die Klartext-Nachricht nicht unerlaubt manipuliert wurde. Im gegenteiligen Fall gilt der Sender als nicht korrekt authentisiert, da die Schlüssel offensichtlich nicht korrespondieren. Die Nachricht wird dann vom Empfänger aus Sicherheitsgründen verworfen oder ihre Annahme wird verweigert, da der Inhalt als nicht vertrauenswürdig klassifiziert ist. Der Sender kann sich also durch Verwendung des geschilderten Signaturmechanismus' beim Empfänger eindeutig ausweisen und ihm somit die Vertrauenswürdigkeit der Nachricht nachweisen.

Zur Verifikation empfangener, signierter Nachrichten umfaßt bei dieser Ausführungsform ein zum Empfang eingerichtetes Telekommunikations-Endgerät eine Verifikationseinrichtung, die vorteilhaft als ein von einem Prozessor des Endgeräts ausführbares Programm realisiert ist. Auch hier ist es sinnvoll, die diesbezüglichen Funktionalitäten eines Sende- und eines Empfangsgerätes in einer Signatureinrichtung zu integrieren, die sowohl Nachrichten zu signieren vermag als auch Signaturen verifizieren kann.

Der zum Signieren benötigte öffentliche Signaturschlüssel wird vorteilhaft auf einem öffentlichen Schlüssel-Server im Internet oder einer sonstigen, zumindest für erfindungsgemäße Empfangsgeräte zugänglichen Stelle oder proprietären Datenbank abgelegt. Bei der hier geschilderten asymmetrischen Verschlüsselung ist dies möglich, weil selbst bei Kenntnis eines öffentlichen Schlüssels, einer Signatur und der zugehörigen Klartext-Nachricht nicht auf den privaten Schlüssel zurückgeschlossen werden kann. Alternativ können auch symmetrische Signaturverfahren (z.B. DES, IDEA) bei Bereitstellung der entsprechenden Infrastruktur verwendet werden.

Ein zusätzliches Sicherheitsmerkmal erhält man, wenn neben der eigentlichen Nachricht auch ihre Kennung in die Signatur integriert wird. So kann sichergestellt werden, daß neben der Nachricht auch die Kennung vor oder während der Datenübertragung nicht manipuliert wurde.

Bei einer vorteilhaften Ausgestaltung dieser Ausführungsform umfaßt ein als Sendegerät verwendetes Telekommunikations-Endgerät als Signatureinrichtung und sicheren Speicher für den privaten Schlüssel eine SIM-Karte. Die Signaturberechnung kann dann von dem auf der SIM-Karte befindlichen Prozessor durchgeführt werden.

Bei einer weiteren bevorzugten Ausführungsform der vorliegenden Erfindung wird vor dem erstmaligen Versenden oder dem Weiterversenden einer Nachricht eine Abbruchbedingung an der Nachricht angebracht, um eine unbegrenzte und unkontrollierte Reproduktion der Nachricht zu verhindern. Zur Generierung einer Abbruchbedingung und zu ihrer Überprüfung und gegebenenfalls Aktualisierung umfaßt ein erfindungsgemäßes Telekommunikations-Endgerät eine Abbruchbedingungseinrichtung, die besonders vorteilhaft aus einem Programm bestehen kann, das von einem Prozessor des Telekommunikations-Endgerätes ausgeführt wird.

Die erfindungsgemäße Abbruchbedingung kann im einfachsten Fall aus einem Datum bestehen, nach dem sich die Nachricht nicht mehr weiterversenden läßt. Alternativ kann eine maximale Reproduktionszahl n, oder eine maximale Kopienzahl *k* als Abbruchbedingung verwendet werden, so daß eine Nachricht, ausgehend von ihrer erstmaligen Versendung durch das erste Sendegerät nur über eine sequentielle Kette von n aufeinanderfolgenden Sendegeräten weiterversendet werden kann (die Nachricht sich also über *n* Generationen reproduziert) bzw. von jedem der Sendegeräte nur an *k* parallele Empfangsgeräte versendet werden kann. Bei Verwendung beider Kriterien ist die maximale Anzahl von Empfängern (beispielsweise zur Kostenkontrolle) als die Summe über *kⁱ* für *i*=1 bis *n* exakt bestimmbar.

Nach dem Empfang einer Nachricht bzw. vor dem Weiterversenden einer empfangenen Nachricht wird die Abbruchbedingung von der Abbruchbedingungseinrichtung des Empfangs- bzw. Sendegerätes überprüft, um festzustellen, ob ein erneutes Weiterversenden der Nachricht noch möglich ist. Falls die Abbruchbedingung erfüllt ist (z.B. durch das Überschreiten eines Verfallsdatums), wird die Weiterversendung der Nachricht blockiert. Andernfalls wird die Abbruchbedingung vor dem Weiterversenden der Nachricht gegebenenfalls aktualisiert, indem ein Zähler dekrementiert wird, z.B. die maximale Reproduktionszahl n oder die maximal Kopienzahl *k*.

Natürlich muß eine Abbruchbedingung nicht notwendigerweise beim erstmaligen Versenden einer Nachricht eingerichtet werden, sondern kann jederzeit von einem der weiteren Sendegeräte eingerichtet werden. Ferner kann ein Abbruch auch durch manuelles Löschen der Nachricht oder Sperren der Weiterleitung erfolgen. Auch manuelles Einleiten der Weiterleitung der Nachrichten einzelner, selektierter oder aller vorhandenen Nachrichten ist denkbar.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Figuren. Darin zeigen:
- Figur 1: ein Ausführungsbeispiel eines erfindungsgemäßen Verfahrens zur drahtlosen Nahbereichsübertragung einer Nachricht von einem Sendegerät an ein Empfangsgerät und
- Figur 2: den sukzessiven Aufbau eines Ad-hoc Netzwerks und die Nachrichtenübertragung darin.

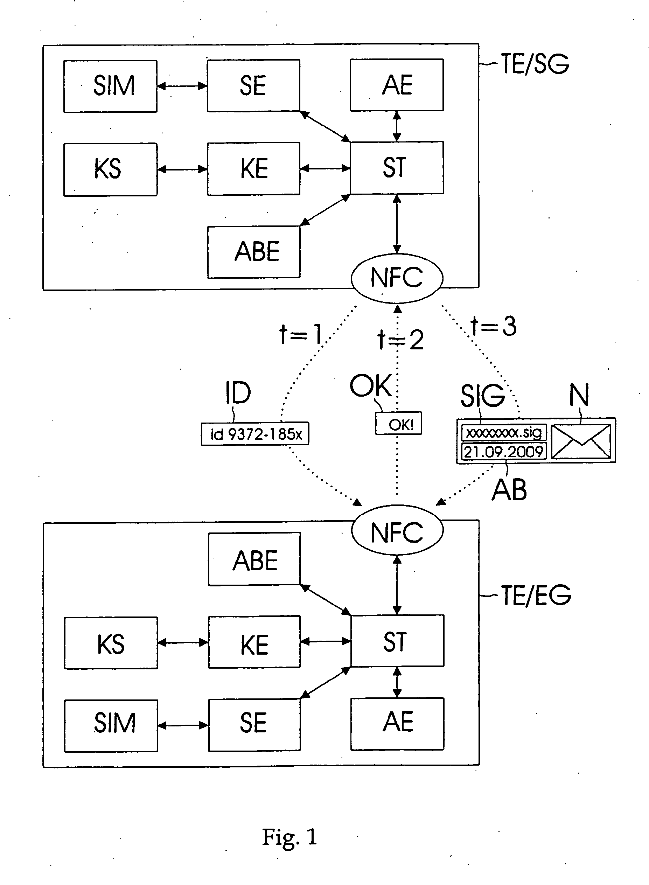

Figur 1 illustriert die drahtlose Übertragung einer Nachricht von einem als Sendegerät SG eingerichteten Telekommunikations-Endgerät TE an ein als Empfangsgerät EG eingerichtetes Telekommunikations-Endgerät TE, das sich im Nahbereich des Sendegerätes SE befindet. Zur Übertragung von Nachrichten durch Telekommunikations-Endgeräte TE mit verschieden großen Nahbereichen ist es selbstverständlich notwendig, daß sich beide Geräte gleichzeitig im kleineren der beiden Nahbereiche befinden. Da im vorliegenden Beispiel sowohl das Sendegerät SG als auch das Empfangsgerät EG Nachrichten versenden und empfangen können, umfassen beide Telekommunikations-Endgeräte TE prinzipiell die gleichen Komponenten.

Die Steuerung sämtlicher Funktionen eines Telekommunikations-Endgerätes TE wird von der Steuereinrichtungen ST übernommen. Die Steuereinrichtung ST koordiniert jeweils eine Signatureinrichtung SE, eine Kennungseinrichtung KE und eine Abbruchbedingungseinrichtung ABE. Alle diese operativen Komponenten ST, SE, KE, ABE des Telekommunikations-Endgerätes TE können als Softwareprogramme realisiert sein, die von einem Prozessor (nicht dargestellt) des Telekommunikations-Endgeräts TE ausgeführt werden.

Abhängig von der Funktion des Telekommunikations-Endgerätes TE entweder als Sendegerät SG oder als Empfangsgerät EG führen die operativen Komponenten ST, SE, KE, ABE unterschiedliche Operationen aus, die im folgenden beschrieben werden. Zum Anzeigen von zu versendenden oder empfangenen Nachrichten stehen dem Sendegerät SG und dem Empfangsgerät EG ferner optische Anzeigeeinrichtungen AE in Form von Displays, Monitoren oder Bildschirmen zur Verfügung.

Als weitere wichtige Komponente umfassen die erfindungsgemäßen Telekommunikations-Endgeräte TE jeweils eine Nahbereichskommunikationseinrichtung NFC. Hierzu wird besonders vorteilhaft die NFC-Technologie (Near Field Communication) eingesetzt, die Daten mittels magnetischer Felder im Frequenzband 13,56 MHz in einem Radius von typischerweise 20 cm überträgt. Die magnetische Feldstärke eines NFC-Geräts ist in der NFC-Spezifikation ECMA-340 (NFCIP-1) angegeben und beträgt mindestens 1,5 A/ m, sowie maximal 7,5 A/ m bei einer Sendefrequenz von 13,56 MHz. Zur drahtlosen Nahbereichskommunikation geeignete alternative Verfahren sind die Datenübertragung mittels kommunizierender Infrarot-Schnittstellen (IRED), Bluetooth- oder WLAN-Technologien (wireless Local Area Network) oder auch jede beliebige sonstige Technologie, die zur Nahbereichskommunikation geeignet ist.

Das Versenden der Nachricht N durch das Sendegerät SG vollzieht sich in drei Schritten t=1 bis t=3. Im ersten Schritt (t=1) wird eine individuelle und eindeutige Kennung ID "id9372-185x" der Nachricht N über die Nahbereichskommunikationseinrichtungen NFC vom Sendegerät SG an das Empfangsgerät EG versendet. Falls das Sendegerät SG die Nachricht N in einer vorherigen Übertragungssession von einem anderen Telekommunikations-Endgerät TE empfangen hat, wurde damals auch die Kennung ID dieser Nachricht N übermittelt und kann nun beim Weiterversenden der Nachricht N wieder verwendet werden. Die Kennungen aller empfangenen Nachrichten werden durch die Kennungseinrichtung KE in einem speziell dazu eingerichteten Kennungsspeicher KS abgelegt. Beim Weiterversenden der Nachricht N wird deren Kennung ID aus dem Kennungsspeicher KS abgerufen und über die Nahbereichskommunikationseinrichtung NFC an das Empfangsgerät EG versendet. Falls die Nachricht N jedoch auf dem Sendegerät SG mittels entsprechender Eingabemittel (nicht gezeigt) erstmals erzeugt wurde und das Sendegerät SG die Nachricht N daher erstmalig versendet, wird die individuelle, eindeutige Kennung ID für diese Nachricht N von der Kennungseinrichtung KE generiert. Eine solche Kennung ID kann beispielsweise aus der Gerätenummer des Sendegerätes SG kombiniert mit einer laufenden Nummer oder einem Hash-Wert der Nachricht N bestehen.

Das Empfangsgerät EG, das über seine Nahbereichskommunikationseinrichtung NFC die Kennung ID empfängt, leitet diese über die Steuereinrichtung ST an seine Kennungseinrichtung KE weiter. Die Kennungseinrichtung KE vergleicht die Kennung ID dann mit allen Kennungen, die in ihrem eigenen Kennungsspeicher KS vorliegen. Das Vorliegen der Kennung ID im Kennungsspeicher KS signalisiert, daß die vom Sendegerät SG zu versendende Nachricht N von dem Empfangsgerät EG bereits zu einem früheren Zeitpunkt entweder von diesem oder von einem anderen Sendegerät SG empfangen wurde. In diesem Fall erfolgt keine weitere Reaktion des Empfangsgerätes EG auf den Empfang der Kennung ID, und die Kommunikation zwischen dem Sendegerät SG und dem Empfangsgerät EG ist damit beendet.

Falls die Kennung ID jedoch nicht im Kennungsspeicher KS des Empfangsgerätes EG vorliegt, ist nachgewiesen, daß die zu der betreffenden Kennung ID korrespondierende Nachricht N von dem Empfangsgerät EG bisher noch nicht empfangen wurde. In diesem Fall sendet das Empfangsgerät EG im zweiten Schritt (t=2) der Nachrichtenübertragung als Reaktion auf den Empfang der Kennung ID über seine drahtlose Nahbereichskommunikationseinrichtung NFC ein Akzeptanzsignal OK an das Sendegerät SG.

Sobald die Steuereinrichtung ST des Sendegerätes SG den Empfang des Akzeptanzsignals OK registriert, wird der letzte Schritt (t=3) der Nachrichtenübertragung eingeleitet. Neben der eigentlichen Nachricht N wird in diesem Schritt zusätzlich eine Signatur SIG der Nachricht N an das Empfangsgerät EG übermittelt. Mit der Signatur SIG kann sich das Sendegerät SG bzw. der Absender eindeutig gegenüber dem Empfangsgerät EG bzw. dem Empfänger authentisieren bzw. das Empfangsgerät EG kann über die Signatur SIG der Nachricht N sicherstellen, daß die Nachricht N tatsächlich von dem genannten vertrauenswürdigen Sendegerät SG versandt wurde.

Generiert wird die Signatur SIG von der Signatureinrichtung SE des Sendegerätes SG. Dazu wird die Nachricht N von einem speziellen Verschlüsselungsalgorithmus (z. B. RSA/PGP) mittels eines privaten Signaturschlüssels verschlüsselt, der in einem sicheren Speicher SIM des Sendegerätes SG aufbewahrt wird.

Des weiteren wird im Schritt t=3 eine Abbruchbedingung AB zusammen mit der Nachricht N versendet, hier ein Verfallsdatum "21.09.2009". Falls das Sendegerät SG die Nachricht N seinerseits zu einem früheren Zeitpunkt von einem anderen Sendegerät empfangen hat, kann die Abbruchbedingung AB beim Weiterversenden der Nachricht N ebenfalls weiterversendet werden. Wenn die Abbruchbedingung AB schließlich erfüllt ist, indem hier das Verfallsdatum überschritten ist, wird die Nachricht N von einem potentiellen Sendegerät SG nicht mehr weiterversandt.

Falls es sich bei der Abbruchbedingung AB, entgegen der Darstellung in Figur 1, nicht um ein absolutes Verfallsdatum sondern um einen Dekrement-Zähler handelt, muß dieser Zähler vor dem Weiterversenden der Abbruchbedingung AB durch eine Abbruchbedingungseinrichtung ABE des Sendegerätes SG aktualisiert werden. So wird beispielsweise eine Abbruchbedingung AB, die die maximale Reproduktionszahl der Nachricht N angibt, vor dem Weiterversenden der Nachricht N dekrementiert. Falls ein solcher Zähler schließlich durch Dekrementierung auf den Wert Null fällt, wird die Nachricht N nicht mehr weiterversandt, da die maximale Reproduktionszahl erreicht ist.

Das Empfangsgerät EG empfängt somit im Schritt t=3 der Nachrichtenübertragung die Nachricht N, deren Signatur SIG sowie deren Abbruchbedingungen AB über die drahtlose Nahbereichskommunikationseinrichtung NFC von dem Sendegerät SG. Dort wird, gesteuert von der Steuereinrichtung ST des Empfangsgerätes EG, zunächst die Signatur SIG der Nachricht N durch die Signatureinrichtung SE verifiziert. Im vorliegenden Beispiel der Figur 1 handelt es sich bei der Signatureinrichtung SE um eine kombinierte Einrichtung zur Generierung von Signaturen SIG sowie zu ihrer Verifikation. Erfindungsgemäß ist es ebenfalls möglich, daß ein Telekommunikations-Endgerät TE eine Signatureinrichtung zum Signieren von Nachrichten N und eine Verifikationseinrichtung zum Verifizieren von Signaturen SIG besitzt.

Neben dem vorstehend beschriebenen Verfahren, welches eine Nachricht N in drei Schritten t=1 bis 3 verschickt, ist auch eine Alternative denkbar, die unter Auslassung der Schritte t=1 und t=2 ein Versenden der Nachricht N ohne Vorabkontrolle vorsieht und demnach nur den Schritt t=3 beinhaltet.

Bei dem in Figur 1 dargestellten Empfangsgerät EG wird die Signatur SIG von dessen Signatureinrichtung SE verifiziert. Dazu wird die Signatur SIG mit einem öffentlichen Signaturschlüssel entschlüsselt, der von dem Empfangsgerät EG von einem speziellen Signaturschlüsselserver im Internet oder einer sonstigen dem Empfangsgerät EG zugänglichen Datenbank angefordert wird. Dieser öffentliche Signaturschlüssel korrespondiert mit dem privaten Signaturschlüssel des Sendegerätes SG, der in dem sicheren Speicher SIM des Sendegerätes SG gespeichert ist. Die Entschlüsselung der Nachricht N mit dem korrespondierenden öffentlichen Signaturschlüssel reproduziert wieder den Klartext der Nachricht N. Durch den Vergleich der empfangenen Nachricht N und der entschlüsselten Signatur SIG kann das Empfangsgerät EG die Identität des Sendegerätes SG überprüfen. Dadurch ist sichergestellt, daß nur Nachrichten N von vertrauenswürdigen und identifizierbaren Sendern empfangen werden.

Die Kennung ID der Nachricht N wird vom Empfangsgerät EG entweder bereits nach dem Schritt t=1 oder erst nach dem Schritt t=3 im Kennungsspeicher KS gespeichert, um ein erneutes Empfangen der Nachrichten N in Zukunft über einen Kennungsvergleich durch die Kennungseinrichtung KE zu verhindern.

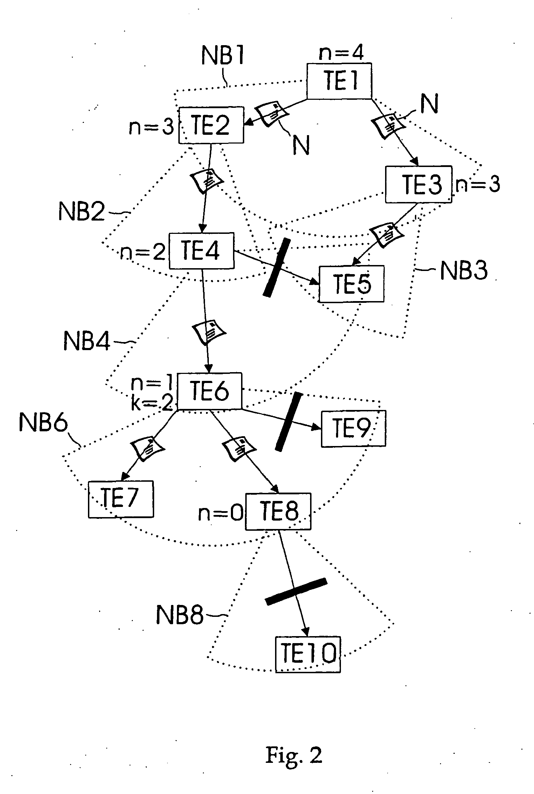

Figur 2 illustriert ein Ad-hoc Netzwerk zur Verbreitung einer Nachricht N, bestehend aus zehn Telekommunikations-Endgeräten TE1 bis TE10. Die Nachrichtenverbreitung wird initiiert von dem Telekommunikations-Endgerät TE1, das die Nachricht N bereitstellt und mit einer Abbruchbedingung versieht. Die Abbruchbedingung n=4 repräsentiert die maximale Anzahl der Reproduktionszyklen der Nachricht, so daß die Nachricht N im vorliegenden Beispiel nur über vier Generationen reproduziert werden kann. Im Nahbereich NB1 des Telekommunikations-Endgerätes TE1 befinden sich zwei weitere Telekommunikations-Endgeräte TE2, TE3, die jeweils zum Empfang von Nachrichten N eingerichtet sind. Diese beiden Telekommunikations-Endgeräte TE2, TE3 werden von der Nahbereichskommunikationseinrichtung NFC des Telekommunikations-Endgeräts TE1 detektiert, und die Nachricht N wird anschließend an jedes der beiden Telekommunikations-Endgeräte TE2, TE3 versandt. Die beiden Empfangsgeräte TE2, TE3 aktualisieren nach dem Empfang der Nachricht N jeweils die Abbruchbedingung, indem sie die verbleibende Reproduktionszahl auf n=3 reduzieren.

In der zweiten Generation fungieren die Telekommunikations-Endgeräte TE2 und TE3 nunmehr als Sendegeräte und detektieren in ihren jeweiligen Nahbereichen NB2 und NB3 zwei zum Empfang von Nachrichten N eingerichtete weitere Telekommunikations-Endgeräte TE4 und TE5. An beide wird die Nachricht N weiterversandt. TE4 und TE5 aktualisieren jeweils erneut die Abbruchbedingung auf n=2. Die Telekommunikations-Endgeräte TE4, TE5 befinden sich in den Nahbereichen NB4, NB5 des jeweils anderen. In dem illustrierten Beispiel der Figur 2 wird das Telekommunikations-Endgerät TE5 von dem Telekommunikations-Endgerät TE4 detektiert und eine Sender/Empfängerbeziehung (bzw. Master/Slave-Beziehung) etabliert.

Entsprechend dem in Figur 1 gezeigten dreistufigen Übertragungsprozeß beginnt die Nachrichtenübertragung mit dem Versenden der Nachrichtkennung der Nachricht N von dem Telekommunikations-Endgerät TE4 an das Telekommunikations-Endgerät TE5. Da das Telekommunikations-Endgerät TE5 die Nachricht N bereits zu einem früheren Zeitpunkt von dem Telekommunikations-Endgerät TE 3 empfangen hat, ist die Kennung der Nachricht N bereits in dessen Kennungsspeicher vorhanden. Aus diesem Grund verweigert das Telekommunikations-Endgerät TE5 den Empfang der Nachricht N von dem Telekommunikations-Endgerät TE4, indem es kein Akzeptanzsignal zurückschickt. Eine Nachrichtenübertragung von dem Telekommunikations-Endgerät TE4 an das Telekommunikations-Endgerät TE5 kommt somit nicht zustande.

Im Nahbereich NB4 des Telekommunikations-Endgerätes TE4 befindet sich jedoch auch das Telekommunikations-Endgerät TE6, das die Nachricht N schließlich von dem Telekommunikations-Endgerät TE4 empfängt und die Abbruchbedingung auf n=1 aktualisiert.

In dem Nahbereich NB6 des Telekommunikations-Endgerätes TE6 befinden sich nunmehr drei weitere Telekommunikations-Endgeräte TE7, TE8, TE9. Neben der Abbruchbedingung der Reproduktionszahl (aktuell n=1) existiert bei dem Telekommunikations-Endgerät TE6 mit der maximalen Kopienzahl (k=2) eine weitere bei der Weiterversendung von Nachrichten zu beachtende Abbruchbedingung. Die maximale Kopienzahl k=2 gibt an, daß die Nachricht N von dem Telekommunikations-Endgerät TE6 nur an zwei Empfangsgeräte weiterversendet werden kann. Da das Telekommunikations-Endgerät TE6 die Nachricht N an Telekommunikations-Endgeräte in ihrem Nahbereich NB6 in der Reihenfolge ihrer Detektion weiterversendet, wird die Nachricht N an die Telekommunikations-Endgeräte TE7 und TE8 versandt, während ein Weiterversenden an das Telekommunikations-Endgerät TE9 aufgrund der dann erreichten maximalen Kopienzahl von k=2 nicht mehr möglich ist.

Das Telekommunikations-Endgerät TE8 aktualisiert nach dem Empfang der Nachricht N seinerseits dessen Abbruchbedingung der Reproduktionszahl auf n=0, so daß das Telekommunikations-Endgerät TE8 die Nachricht N nicht mehr weiterversenden kann, selbst wenn ein zum Empfang von Nachrichten N eingerichtetes Telekommunikations-Endgerät TE10 sich im Nahbereich NB8 des Telekommunikations-Endgerätes TE8 befindet.

## Patentansprüche

1. Verfahren zum örtlichen und/oder regionalen Verbreiten einer Nachricht (N), wobei das Verfahren die folgenden Schritte umfasst:
- Bereitstellen der Nachricht (N) auf einem ersten Sendegerät (SG),
- drahtloses, erstmaliges Versenden der bereitgestellten Nachricht (N) von dem ersten Sendegerät (SG) im Nahbereich (NB1-NB4, NB6, NB8),
- drahtloses Empfangen der versandten Nachricht (N) durch jedes im Nahbereich (NB1-NB4, NB6, NB8) des ersten Sendegerätes (SG) befindliche Telekommunikations-Endgerät (TE; TE1-TE10), welches als Empfangsgerät (EG) zum Empfang der versendeten Nachricht (N) eingerichtet ist, und
- automatisches Weiterversenden der empfangenen Nachricht (N) im Nahbereich (NB1-NB4, NB6, NB8) des Empfangsgerätes (EG) von jedem Empfangsgerät (EG), das als weiteres Sendegerät (SG) zum Weiterversenden der empfangenen Nachricht (N) eingerichtet ist,
**dadurch gekennzeichnet, dass** das Verfahren die folgenden weiteren Schritte umfasst:
- Kennzeichnen der Nachricht (N) mit einer individuellen Kennung (ID) durch das erste Sendegerät (SG),
- Versenden der Kennung (ID) durch das erste Sendegerät (SG) vor dem Schritt des Versendens und Weiterversendens der Nachricht (N),
- Empfangen der Kennung (ID) durch das Empfangsgerät (EG),
- Überprüfen der Kennung (ID) durch das Empfangsgerät (EG),
- Verwerfen der Nachricht (N) durch das Empfangsgerät (EG), falls die Kennung (ID) anzeigt, daß die Nachricht (N) bereits empfangen wurde, oder andernfalls Akzeptieren der Nachricht (N), indem das Empfangsgerät (EG) auf den Empfang der Kennung (ID) mit einem Akzeptanzsignal an das erste Sendegerät (SG) antwortet und das erste Sendegerät (SG) bei Empfang des Akzeptanzsignals die Nachricht (N) versendet, und Ablegen der Kennung (ID) in einem Kennungsspeicher (KS).

2. Verfahren nach Anspruch 1, **gekennzeichnet durch** die folgenden Schritte vor dem Schritt des Versendens oder Weiterversendens:
- Detektieren jedes im Nahbereich (NB1-NB4, NB6, NB8) befindlichen, als Empfangsgerät (EG) eingerichteten Telekommunikations-Endgeräts (TE; TE1-TE10) **durch** das erste bzw. weitere Sendegerät (SG), und
- Aufbauen einer Verbindung zwischen dem Sendegerät (SG) und jedem detektierten Empfangsgerät (EG).

3. Verfahren nach einem der Ansprüche 1 und 2, **dadurch gekennzeichnet, daß** die Kennung (ID) der Nachricht (N) in dem Kennungsspeicher (KS) gespeichert bleibt, wenn die Nachricht (N) gelöscht wird.

4. Verfahren nach einem der Ansprüche 1 bis 3, **gekennzeichnet durch** den Schritt des Signierens der Nachricht (N) **durch** eine Signatur (SIG) mit einem privaten Signaturschlüssel, der auf dem ersten bzw. weiteren Sendegerät (SG) gespeichert ist, vor dem Schritt des erstmaligen Versendens bzw. Weiterversendens der Nachricht (N).

5. Verfahren nach Anspruch 4, **dadurch gekennzeichnet, daß** die Kennung (ID) in die signierte Nachricht (N) integriert wird.

6. Verfahren nach einem der Ansprüche 1 bis 5, **gekennzeichnet durch** den Schritt des Versehens der Nachricht (N) mit einer Abbruchbedingung (AB) **durch** das Sendegerät (SG), vor dem Schritt des erstmaligen Versendens oder Weiterversendens.

7. Verfahren nach Anspruch 6, **dadurch gekennzeichnet, daß** die Abbruchbedingung (AB) ein Verfallsdatum und/ oder eine maximale Reproduktionszahl und/ oder eine maximal Kopienzahl ist.

8. Verfahren nach einem der Ansprüche 1 bis 7, **gekennzeichnet durch** das unmittelbare Anzeigen der empfangenen Nachricht (N).

9. Telekommunikations-Endgerät (TE; TE1-TE10) zum Senden und Empfangen von Nachrichten (N), wobei das Telekommunikations-Endgerät (TE; TE1-TE10) eine Nahbereichskommunikationseinrichtung (NFC) umfaßt, mittels der das Telekommunikations-Endgerät (TE; TE1-TE10) sowohl als ein Sendegerät (SG) eine zu versendende Nachricht (N) an ein im Nahbereich (NB1-NB4, NB6, NB8) des Sendegerätes (SG) befindliches, als Empfangsgerät (EG) eingerichtetes Telekommunikations-Endgerät (TE; TE1-TE10) drahtlos versenden als auch als ein Empfangsgerät (EG) eine zu empfangende Nachricht (N) von einem anderen im Nahbereich (NB1-NB4, NB6, NB8) des Telekommunikations-Endgeräts (TE; TE1-TE10) befindlichen Sendegerät (SG) drahtlos empfangen kann, wobei das Telekommunikations-Endgerät (TE; TE1-TE10) individuell einrichtbar ist, drahtlos die im Nahbereich (NB1-NB4, NB6, NB8) von einem Sendegerät (SG) empfangene Nachricht (N) automatisch im Nahbereich (NB1-NB4, NB6, NB8) an ein Empfangsgerät (EG) weiterzuversenden, wobei das Telekommunikations-Endgerät (TE; TE1-TE10) eine Kennzeichnungseinrichtung (KE) zur Kennzeichnung der bereitzustellenden Nachricht (N) mit einer eindeutigen Kennung (ID) umfasst, eine Steuereinrichtung (ST), die zunächst die Kennung (ID) versendet und, falls das Telekommunikations-Endgerät (TE; TE1-TE10) ein Akzeptanz-Signal (OK) empfängt, anschließend die Nachricht (N) versendet, sowie einen Kennungsspeicher (KS) zum Speichern von Kennungen (ID) von empfangenen Nachrichten (N) und eine Überprüfungseinrichtung zum Überprüfen anhand der gespeicherten Kennungen (ID), ob die Nachricht (N) bereits früher schon einmal empfangen wurde.

10. Telekommunikations-Endgerät (TE; TE1-TE10) nach Anspruch 9, **dadurch gekennzeichnet, daß** das Telekommunikations-Endgerät (TE; TE1-TE10) ein mobiles Telekommunikations-Endgerät (TE; TE1-TE10) ist, insbesondere ein Notebook, ein Mobiltelefon, ein Pager oder ein Personal Digital Assistent.

11. Telekommunikations-Endgerät (TE; TE1-TE10) nach Anspruch 9 oder 11, **dadurch gekennzeichnet, daß** die Nahbereichskommunikationseinrichtung (NFC) eingerichtet ist, Daten drahtlos über NFC, W-LAN, Bluetooth, RFID oder eine Infrarot- Schnittstelle zu versenden bzw. zu empfangen.

12. Telekommunikations-Endgerät (TE; TE1-TE10) nach einem der Ansprüche 9 bis 11, **dadurch gekennzeichnet, daß** es für die Nachrichten (N) des Typs SMS oder MMS eingerichtet ist.

13. Telekommunikations-Endgerät (TE; TE1-TE10) nach einem der Ansprüche 9 bis 12, **dadurch gekennzeichnet, daß** das Telekommunikations-Endgerät (TE; TE1-TE10) eine Bereitstellungseinrichtung für einen Nutzer zum Bereitstellen der zu sendenden Nachricht (N) durch den Nutzer umfaßt.

14. Telekommunikations-Endgerät (TE; TE1-TE10) nach einem der Ansprüche 9 bis 13, **dadurch gekennzeichnet, daß** das Telekommunikations-Endgerät (TE; TE1-TE10) einen Speicher (SIM) zum Speichern eines privaten Signaturschlüssels und eine Signiereinrichtung (SE) umfaßt, die eingerichtet ist, eine zu versendende Nachricht (N) mittels des privaten Signaturschlüssels zu signieren.

15. Telekommunikations-Endgerät (TE; TE1-TE10) nach einem der Ansprüche 9 bis 14, **dadurch gekennzeichnet, daß** das Telekommunikations-Endgerät (TE; TE1-TE10) eine Verifikationseinrichtung umfaßt, die eingerichtet ist, eine signierte Nachricht (N) mittels eines öffentlichen Signaturschlüssels zu verifizieren.

16. Telekommunikations-Endgerät (TE; TE1-TE10) nach einem der Ansprüche 9 bis 15, **dadurch gekennzeichnet, daß** das Telekommunikations-Endgerät (TE; TE1-TE10) eine Abbruchbedingungseinrichtung (ABE) umfaßt, die eingerichtet ist, um eine Abbruchbedingung (AB) der empfangenen Nachricht (N) vor dem Weiterversenden zu überprüfen und/oder zu aktualisieren.

17. Telekommunikations-Endgerät (TE; TE1-TE10) nach einem der Ansprüche 9 bis 16, **dadurch gekennzeichnet, daß** das Telekommunikations-Endgerät (TE; TE1-TE10) eine Anzeigeeinrichtung (AE) und eine Steuerungseinrichtung (ST) umfaßt, die eingerichtet sind, eine empfangene Nachricht (N) unmittelbar auf der Anzeigeeinrichtung (AE) anzuzeigen.

18. Ad-Hoc Netzwerk, bestehend aus mindestens zwei Telekommunikations-Endgeräten (TE; TE1-TE10) nach einem der Ansprüche 9 bis 17.

## Claims

1. A method for locally and/or regionally diffusing a message (N), whereby the method comprises the following steps:
- supplying the message (N) on a first transmitting device (SG),
- wirelessly initially sending the supplied message (N) by the first transmitting device (SG) in the near zone (NB1-NB4, NB6, NB8),
- wirelessly receiving the sent message (N) by each telecommunication end device (TE; TE1-TE10) located in the near zone (NB1-NB4, NB6, NB8) of the first transmitting device (SG) and adapted as a receiving device (EG) for receiving the sent message (N), and
- automatically forwarding the received message (N) in the near zone (NB1-NB4, NB6, NB8) of the receiving device (EG) by each receiving device (EG) which is adapted as a further transmitting device (SG) for forwarding the received message (N),
**characterized in that** the method comprises the following further steps:
- marking the message (N) with an individual identifier (ID) by the first transmitting device (SG),
- sending the identifier (ID) by the first transmitting device (SG) before the step of sending and forwarding the message (N),
- receiving the identifier (ID) by the receiving device (EG),
- checking the identifier (ID) by the receiving device (EG),
- discarding the message (N) by the receiving device (EG) if the identifier (ID) displays that the message (N) was already received, or otherwise accepting the message (N) by the receiving device (EG) answering the reception of the identifier (ID) with an acceptance signal to the first transmitting device (SG), and the first transmitting device (SG) sending the message (N) upon reception of the acceptance signal, and depositing the identifier (ID) in an identifier memory (KS).

2. The method according to claim 1, **characterized by** the following steps before the step of sending or forwarding:
- detecting each telecommunication end device (TE; TE1-TE10) located in the near zone (NB1-NB4, NB6, NB8) and adapted as a receiving device (EG), by the first or further transmitting device (SG), and
- setting up a connection between the transmitting device (SG) and each detected receiving device (EG).

3. The method according to either of claims 1 and 2, **characterized in that** the identifier (ID) of the message (N) remains stored in the identifier memory (KS) when the message (N) is erased.

4. The method according to any of claims 1 to 3, **characterized by** the step of signing the message (N) by a signature (SIG) with a private signature key which is stored on the first or further transmitting device (SG), before the step of initially sending or forwarding the message (N).

5. The method according to claim 4, **characterized in that** the identifier (ID) is integrated into the signed message (N).

6. The method according to any of claims 1 to 5, **characterized by** the step of providing the message (N) with an abort condition (AB) by the transmitting device (SG), before the step of initial sending or forwarding.

7. The method according to claim 6, **characterized in that** the abort condition (AB) is an expiry date and/or a maximum number of reproductions and/or a maximum number of copies.

8. The method according to any of claims 1 to 7, **characterized by** the immediate displaying of the received message (N).

9. A telecommunication end device (TE; TE1-TE10) for sending and receiving messages (N), whereby the telecommunication end device (TE; TE1-TE10) comprises a near field communication device (NFC) by means of which the telecommunication end device (TE; TE1-TE10) can, as a transmitting device (SG), wirelessly send a message (N) to be sent to a telecommunication end device (TE; TE1-TE10) located in the near zone (NB1-NB4, NB6, NB8) of the transmitting device (SG) and adapted as a receiving device (EG), as well as, as a receiving device (EG), wirelessly receive a message (N) to be received from another transmitting device (SG) located in the near zone (NB1-NB4, NB6, NB8) of the telecommunication end device (TE; TE1-TE10), whereby the telecommunication end device (TE; TE1-TE10) is individually adaptable to wirelessly forward the message (N) received from a transmitting device (SG) in the near zone (NB1-NB4, NB6, NB8) automatically to a receiving device (EG) in the near zone (NB1-NB4, NB6, NB8), whereby the telecommunication end device (TE; TE1-TE10) comprises a marking device (KE) for marking with a unique identifier (ID) the message (N) to be supplied, a control device (ST) which first sends the identifier (ID) and, if the telecommunication end device (TE; TE1-TE10) receives an acceptance signal (OK), subsequently sends the message (N), as well as an identifier memory (KS) for storing identifiers (ID) from received messages (N), and a checking device for checking on the basis of the stored identifiers (ID) whether the message (N) has already been received before.

10. The telecommunication end device (TE; TE1-TE10) according to claim 9, **characterized in that** the telecommunication end device (TE; TE1-TE10) is a mobile telecommunication end device (TE; TE1-TE10), in particular a notebook, a mobile telephone, a pager or a personal digital assistant.

11. The telecommunication end device (TE; TE1-TE10) according to claim 9 or 11, **characterized in that** the near field communication device (NFC) is adapted to send or receive data wirelessly via NFC, W-LAN, Bluetooth, RFID or an infrared interface.

12. The telecommunication end device (TE; TE1-TE10) according to any of claims 9 to 11, **characterized in that** it is adapted for the messages (N) of the SMS or MMS type.

13. The telecommunication end device (TE; TE1-TE10) according to any of claims 9 to 12, **characterized in that** the telecommunication end device (TE; TE1-TE10) comprises a supplying device for a user for supplying by the user the message (N) to be sent.

14. The telecommunication end device (TE; TE1-TE10) according to any of claims 9 to 13, **characterized in that** the telecommunication end device (TE; TE1-TE10) comprises a memory (SIM) for storing a private signature key and a signing device (SE) which is adapted to sign by means of the private signature key a message (N) to be sent.

15. The telecommunication end device (TE; TE1-TE10) according to any of claims 9 to 14, **characterized in that** the telecommunication end device (TE; TE1-TE10) comprises a verification device which is adapted to verify a signed message (N) by means of a public signature key.

16. The telecommunication end device (TE; TE1-TE10) according to any of claims 9 to 15, **characterized in that** the telecommunication end device (TE; TE1-TE10) comprises an abort condition device (ABE) which is adapted to check and/or update an abort condition (AB) of the received message (N) before forwarding.

17. The telecommunication end device (TE; TE1-TE10) according to any of claims 9 to 16, **characterized in that** the telecommunication end device (TE; TE1-TE10) comprises a display device (AE) and a control device (ST) which are adapted to display a received message (N) directly on the display device (AE).

18. An ad-hoc network, consisting of at least two telecommunication end devices (TE; TE1-TE10) according to any of claims 9 to 17.

## Revendications

1. Procédé de diffusion locale ou régionale d'un message (N), ce procédé comprenant les étapes suivantes :
- mise à disposition du message (N) sur un premier appareil d'émission (SG),
- premier envoi sans fil du message (N) mis à disposition du premier appareil d'émission (SG) en champ proche (NB1-NB4, NB6, NB8),
- réception sans fil du message (N) envoyé, reçu par chaque terminal de télécommunication (TE; TE1-TE10) se trouvant en champ proche (NB1-NB4, NB6, NB8) du premier appareil d'émission (SG) et étant configuré en tant qu'appareil de réception (EG) pour la réception du message (N) envoyé, et
- transfert automatique du message (N) reçu, qui est ici transféré en champ proche (NB1-NB4, NB6, NB8) de l'appareil de réception (EG), par chaque appareil de réception (EG) qui est configuré en tant qu'autre appareil d'émission (SG) pour le transfert du message (N) reçu,
**caractérisé en ce que** le procédé comprend les étapes supplémentaires suivantes :
- marquage du message (N) avec un identificateur individuel (ID) par le premier appareil d'émission (SG),
- envoi de l'identificateur (ID) par le premier appareil d'émission (SG) avant l'étape de l'envoi et du transfert du message (N),
- réception de l'identificateur (ID) par l'appareil de réception (EG),
- vérification de l'identificateur (ID) par l'appareil de réception (EG),
- rejet du message (N) par l'appareil de réception (EG) dans le cas où l'identificateur (ID) indique que le message (N) a déjà été reçu, ou bien sinon acceptation du message (N), consistant à ce que l'appareil de réception (EG) répond à la réception de l'identificateur (ID) par un signal d'acceptation au premier appareil d'émission (SG) et le premier appareil d'émission (SG) envoie le message (N) lors de la réception du signal d'acceptation, et stockage de l'identificateur (ID) dans une mémoire d'identificateurs (KS).

2. Procédé selon la revendication 1, **caractérisé par** les étapes suivantes avant l'étape de l'envoi ou du transfert:
- détection, par le premier ou autre appareil d'émission (SG), de chaque terminal de télécommunication (TE; TE1-TE10) configuré en tant qu'appareil de réception (EG) et se trouvant en champ proche (NB1-NB4, NB6, NB8), et
- établissement d'une connexion entre l'appareil d'émission (SG) et chaque appareil de réception (EG) détecté.

3. Procédé selon une des revendications 1 et 2, **caractérisé en ce que** l'identificateur (ID) du message (N) reste mémorisé dans la mémoire d'identificateurs (KS) quand le message (N) est effacé.

4. Procédé selon une des revendications de 1 à 3, **caractérisé par** l'étape de l'opération de signature du message (N) par une signature (SIG) avec une clé privée de signature qui est mémorisée sur le premier ou autre appareil d'émission (SG), avant l'étape du premier envoi ou du transfert du message (N).

5. Procédé selon la revendication 4, **caractérisé en ce que** l'identificateur (ID) est intégré dans le message (N) signé.

6. Procédé selon une des revendications de 1 à 5, **caractérisé par** l'étape consistant en ce que l'appareil d'émission (SG) pourvoit le message (N) d'une condition d'arrêt (AB), avant l'étape du premier envoi ou du transfert.

7. Procédé selon la revendication 6, **caractérisé en ce que** la condition d'arrêt (AB) est une date de péremption et/ou un nombre maximum de reproductions et/ou un nombre maximum de copies.

8. Procédé selon une des revendications de 1 à 7, **caractérisé par** l'affichage direct du message (N) reçu.

9. Terminal de télécommunication (TE; TE1-TE10) destiné à l'envoi et à la réception de messages (N), le terminal de télécommunication (TE; TE1-TE10) comprenant un dispositif de communication en champ proche (NFC) au moyen duquel le terminal de télécommunication (TE; TE1-TE10) peut aussi bien envoyer sans fil en tant qu'un appareil d'émission (SG) un message (N) à envoyer à un terminal de télécommunication (TE; TE1-TE10) configuré en tant qu'appareil de réception (EG) et se trouvant en champ proche (NB1-NB4, NB6, NB8) de l'appareil d'émission (SG) que recevoir sans fil en tant qu'un appareil de réception (EG) un message (N) à recevoir de la part d'un autre appareil d'émission (SG) se trouvant en champ proche (NB1-NB4, NB6, NB8) du terminal de télécommunication (TE; TE1-TE10), le terminal de télécommunication (TE; TE1-TE10) pouvant être configuré individuellement pour transmettre en champ proche (NB1-NB4, NB6, NB8) automatiquement sans fil à un appareil de réception (EG) le message (N) reçu en champ proche (NB1-NB4, NB6, NB8) par un appareil d'émission (SG), le terminal de télécommunication (TE; TE1-TE10) comprenant un dispositif de marquage (KE) destiné au marquage, avec un identificateur (ID) univoque, du message (N) à mettre à disposition, un dispositif de commande (ST) qui envoie tout d'abord l'identificateur (ID) et transfère ensuite le message (N) dans le cas où le terminal de télécommunication (TE; TE1-TE10) reçoit un signal d'acceptation (OK), ainsi qu'une mémoire d'identificateurs (KS) destinée à mémoriser des identificateurs (ID) de messages (N) reçus et un dispositif de vérification destiné à vérifier, au moyen des identificateurs (ID) mémorisés, si le message (N) fut déjà reçu auparavant.

10. Terminal de télécommunication (TE; TE1-TE10) selon la revendication 9, **caractérisé en ce que** le terminal de télécommunication (TE; TE1-TE10) est un terminal de télécommunication mobile (TE; TE1-TE10), notamment un ordinateur portatif, un téléphone mobile, un radiomessageur ou un assistant numérique personnel.

11. Terminal de télécommunication (TE; TE1-TE10) selon la revendication 9 ou 11, **caractérisé en ce que** le dispositif de communication en champ proche (NFC) est configuré pour envoyer ou pour recevoir sans fil des données par l'intermédiaire de NFC, W-LAN, Bluetooth, RFID ou d'une interface infrarouge.

12. Terminal de télécommunication (TE; TE1-TE10) selon une des revendications de 9 à 11, **caractérisé en ce qu'**il est configuré pour les messages (N) du type SMS ou MMS.

13. Terminal de télécommunication (TE; TE1-TE10) selon une des revendications de 9 à 12, **caractérisé en ce que** le terminal de télécommunication (TE; TE1-TE10) comprend un dispositif de mise à disposition pour un usager destinée à la mise à disposition, par l'usager, du message (N) à envoyer.

14. Terminal de télécommunication (TE; TE1-TE10) selon une des revendications de 9 à 13, **caractérisé en ce que** le terminal de télécommunication (TE; TE1-TE10) comprend une mémoire (SIM) destinée à mémoriser une clé privée de signature et un dispositif de signature (SE) qui est configuré pour signer au moyen de la clé privée de signature un message (N) à envoyer.

15. Terminal de télécommunication (TE; TE1-TE10) selon une des revendications de 9 à 14, **caractérisé en ce que** le terminal de télécommunication (TE; TE1-TE10) comprend un dispositif de vérification qui est configuré pour vérifier au moyen d'une clé publique de signature un message (N) signé.

16. Terminal de télécommunication (TE; TE1-TE10) selon une des revendications de 9 à 15, **caractérisé en ce que** le terminal de télécommunication (TE; TE1-TE10) comprend un dispositif de condition d'arrêt (ABE) qui est configuré pour vérifier et/ou actualiser, avant le transfert, une condition d'arrêt (AB) du message (N) reçu.

17. Terminal de télécommunication (TE; TE1-TE10) selon une des revendications de 9 à 16, **caractérisé en ce que** le terminal de télécommunication (TE; TE1-TE10) comprend un dispositif d'affichage (AE) et un dispositif de commande (ST) qui sont configurés pour afficher directement sur le dispositif d'affichage (AE) un message (N) reçu.

18. Réseau ad hoc, consistant en au moins deux terminaux de télécommunication (TE; TE1-TE10) selon une des revendications de 9 à 17.
